# EUROPÄISCHE PATENTSCHRIFT

(11) **EP 3 740 802 B1**
(45) Veröffentlichungstag und Bekanntmachung des Hinweises auf die Patenterteilung: **28.06.2023**
(21) Anmeldenummer: 19703009.1
(22) Anmeldetag: 15.01.2019
(51) Int. Cl.: G02B 21/00, G01J 3/12, G02F 1/11

(54) **AKUSTOOPTISCHE VORRICHTUNG UND VERFAHREN**
ACOUSTO-OPTICAL DEVICE AND METHOD
DISPOSITIF ET PROCÉDÉ ACOUSTO-OPTIQUES

(30) Priorität: 15.01.2018 DE 102018100762
(43) Veröffentlichungstag der Anmeldung: 25.11.2020
(73) Patentinhaber: Leica Microsystems CMS GmbH, 35578 Wetzlar (DE)
(72) Erfinder: KREMER, Manuel, 69181 Leimen (DE); NEUGART, Felix, 68165 Mannheim (DE)
(74) Vertreter: Schaumburg und Partner Patentanwälte mbB
(86) Internationale Anmeldenummer: PCT/EP2019/050868
(87) Internationale Veröffentlichungsnummer: WO 2019/138119

(56) Entgegenhaltungen:
- CN-Y- 201 017 131
- JP-A- H01 265 131
- JP-A- 2003 065 850
- US-A- 4 498 770
- US-A- 5 694 216
- ZENG S ET AL: "SIMULTANEOUS COMPENSATION FOR SPATIAL AND TEMPORAL DISPERSION OF ACOUSTO-OPTICAL DEFLECTORS FOR TWO-DIMENSIONAL SCANNING WITH A SINGLE PRISM", OPTICS LETTERS, OPTICAL SOCIETY OF AMERICA, US, vol. 31, no. 8, 15 April 2006 (2006-04-15) , pages 1091-1093, XP001242404, ISSN: 0146-9592, DOI: 10.1364/OL.31.001091

## Beschreibung

Die vorliegende Erfindung bezieht sich auf das Gebiet der Lichtmikroskopie, insbesondere der Multiphotonenmikroskopie.

Die Erfindung betrifft ein Mikroskop, beinhaltend eine Vorrichtung zur Reduzierung des Cromatic Spread Angles von an einem akustooptischen Element gebeugtem Licht, wobei die Vorrichtung das akustooptische Element und zwei fokussierende Optiken umfasst. Des Weiteren betrifft die Erfindung ein Verfahren zur Reduzierung des Chromatic Spread Angles von an einem akustooptischen Element gebeugtem Licht.

Eine wesentliche Herausforderung in vielen Bereichen der Lichtmikroskopie ist, unabhängig vom eingesetzten Verfahren, die Bereitstellung von Anregungslicht mit einer oder mehreren vorgegebenen Wellenlängen. Je nach Art des Mikroskopieverfahrens und/oder nach Art der Probe können ein oder mehrere Anregungslichtstrahlen, welche in der Regel vorgegebene spektrale Eigenschaften aufweisen müssen, notwendig sein.

Beispielsweise ist es auf dem Gebiet der Fluoreszenzmikroskopie wichtig, Licht mit derjenigen Wellenlänge zu verwenden, die die Fluoreszenz anregt. Verschiedene Wellenlängen werden insbesondere dann gebraucht, wenn die Probe Fluoreszenzstoffe mit unterschiedlichen Anregungsspektren enthält.

Auf den Gebieten der Multiphotonenmikroskopie und der konfokalen Rastermikroskopie (Konfokalmikroskopie) ist es von besonderem Interesse, die Intensitäten für bestimmte Wellenlängen anzupassen oder bestimmte Wellenlängen ein- oder auszuschalten.

Zu diesem Zweck können wellenlängenselektive Elemente zum Einsatz kommen, welche auf dem akustooptischen Effekt basieren. Derartige akustooptische Elemente weisen in der Regel einen sogenannten akustooptischen Kristall auf, welcher mittels eines akustischen Signalgebers, auch als Wandler oder "Transducer" bezeichnet, in Schwingung versetzt wird. In der Regel weist ein derartiger Wandler ein piezoelektrisches Material sowie zwei oder mehrere dieses Material kontaktierende Elektroden auf. Durch elektrisches Beschalten der Elektroden mit Hochfrequenzen, die typischerweise im Bereich zwischen 10 MHz und 10 GHz liegen, wird das piezoelektrische Material zum Schwingen angeregt, so dass eine akustische Welle entstehen kann, die den Kristall durchläuft. Akustooptische Kristalle zeichnen sich dadurch aus, dass die entstehende Schallwelle die optischen Eigenschaften des Kristalls verändert. Insbesondere wird eine periodische Modulation des lokalen Brechungsindex erreicht. Diese Modulation wirkt wie ein (Bragg-)Gitter und kann Licht entsprechender Wellenlänge beugen.

Beispiele für solche akustooptischen Elemente sind akustooptische Modulatoren (AOM), akustooptische Deflektoren (AOD), akustooptische abstimmbare Filter (AOTF), akustooptische Strahlteiler (AOBS) und akustooptische Strahlvereiniger (AOBM). Im Rahmen dieser Anmeldung ist unter einem AOM allgemein ein akustooptisches Element zu verstehen, das einfallendes Licht in Frequenz und/oder Ausbreitungsrichtung und/oder Intensität in Abhängigkeit von der in ihm erzeugten Schallwelle beeinflusst bzw. moduliert. So stellt beispielsweise ein AOD eine spezielle Ausprägungsform eines AOM dar, die auf die Beeinflussung der Ausbreitungsrichtung spezialisiert ist, während ein AOTF ein AOM ist, das insbesondere die Filtereigenschaften des akustooptischen Modulators ausnutzt. Die relativ schnelle Modulierbarkeit der akustischen Welle zusammen mit den, verglichen mit anderen Methoden (beispielsweise über elektrooptische Effekte), geringen Kosten, machen AOMs zum Standardwerkzeug für die Lichtmodulation in Laser-Raster-Mikroskopen.

Weit verbreitet sind AOMs in der Multiphotonenmikroskopie. Hierbei werden üblicherweise Femtosekundenlaser mit Wellenlängen im roten bis zum nahem infraroten Bereich verwendet (F. Helmchen und W. Denk, "Deep tissue two-photon microscopy", Nature Methods 2, 932-940 (2005)). Typische Werte sind Wellenlängen zwischen 650 nm und 1300 nm, Pulslängen zwischen 50 fs und 200 fs, Pulsenergien von einigen 100 nJ bei Repetitionsraten in einer Größenordnung von 100 MHz und linearer Polarisation.

Je nach Einsatzgebiet und Anforderungen können AOMs und allgemein akustooptische Elemente bzw. Akustooptiken auf unterschiedliche Parameter hin optimiert werden. Designparameter sind unter anderem:
- Chromatische Kollinearität der plus/minus ersten Beugungsordnung (der sog. Nutzstrahlen)
- Beugungseffizienz
- spektrale Bandbreite (spektrale Breite) des effizient gebeugten Lichtes bei einer angelegten Radiofrequenz
- Winkelempfindlichkeit des Eingangsstrahls
- Frequenz- und Amplitudenbereich der Radiofrequenzen

insbesondere die chromatische Kollinearität der plus/minus ersten Beugungsordnung (im Folgenden auch kurz ±1. Beugungsordnung), also die Kollinearität der Nutzstrahlen unterschiedlicher Wellenlänge untereinander, ist für den Einsatz in der Multiphotonenmikroskopie von erhöhter Wichtigkeit. Anders ausgedrückt meint chromatische Kollinearität der ±1. Beugungsordnung im Rahmen dieser Anmeldung die Kollinearität der gebeugten Strahlen der plus ersten Beugungsordnung, aber unterschiedlicher Wellenlänge, untereinander oder der minus ersten Beugungsordnung, aber unterschiedlicher Wellenlänge, untereinander. Diese Definition der chromatischen Kollinearität gilt äquivalent auch für höhere Beugungsordnungen (also allgemein ±*n*. Beugungsordnung mit *n* ≥ 1).

Wird ein AOM von einem Lichtpuls mit einer gegebenen Zentralwellenlänge λ und einer spektralen Breite Δλ getroffen, wird eine ±1. Beugungsordnung erzeugt, die üblicherweise als Nutzstrahl dient. Aufgrund der endlichen Beugungseffizienz lässt sich in der Regel auch noch die nullte Beugungsordnung nachweisen, die aber auf Grund der im Vergleich zur ±1. Beugungsordnung schlechten Modulierbarkeit durch den AOM typischerweise keine Verwendung findet.

Auf Grund der endlichen spektralen Bandbreite des Lichtpulses erfolgt eine Winkelaufspaltung der ±1. Beugungsordnung durch das akustooptische Element: Die verschiedenen Farbanteile des Lichtpulses werden durch das akustooptische Element in leicht unterschiedliche Richtungen gebeugt. Es liegt folglich keine chromatische Kollinearität der ±1. Beugungsordnung vor. Die Aussagen der vorherigen Absätze gelten äquivalent natürlich auch für höhere Beugungsordnungen.

Die Größe dieser Auffächerung durch das akustooptische Element wird im Folgenden als "Chromatic Spread Angle" (CSA) bezeichnet und ist definiert als die Ableitung des Beugungswinkels *ϕ* des gebeugten Lichts nach dessen Wellenlänge λ: CSA = d*ϕ* / dλ. Der CSA ist also ein Maß für die Stärke der Abweichung von einer perfekten chromatischen Kollinearität innerhalb einer Beugungsordnung und er hat die Einheit mrad/nm. Je größer die spektrale Bandbreite des auf das akustooptische Element eingestrahlten Lichts, desto größer ist auch der Winkelbereich, in den Licht gebeugt wird (bei gleichbleibendem CSA). Somit wird ein Ausgleich oder eine Reduzierung des CSA bei Licht mit einer großen spektralen Bandbreite für eine effiziente Nutzung des gebeugten Lichts besonders wünschenswert, da mit dem CSA auch dieser Winkelbereich verringert wird.

Für den Einsatz in der (Multiphotonen-)Mikroskopie ist ein zu großer CSA aus zwei Gründen problematisch: Erstens sorgen die unterschiedlichen Propagationsrichtungen der Farbanteile eines Femtosekunden-Lichtpulses dafür, dass das Strahlprofil mit fortschreitender Propagation elliptisch wird und somit die Eintrittspupille des Anregungsobjektives nicht optimal ausgeleuchtet wird, was unter anderem zu einer verschlechterten Auflösung oder Verringerung der Leistung (bei Überleuchtung der Eintrittspupille) führt. Zweitens treffen die verschiedenen Farbanteile des Lichtpulses unter verschiedenen Winkeln auf die Eintrittspupille, was zur Folge hat, dass sie in der Probe räumlich getrennt sind. Diese räumliche Trennung (man spricht auch von einem "räumlich gechirpten Lichtpuls" oder "räumlichem Chirp") reduziert, ebenso wie ein nicht gleichzeitiges Auftreffen der Farbanteile ("zeitlicher Chirp"), die Spitzenintensität und damit die Effizienz der Mehrphotonenanregung.

Die Nachteile, die durch den ersten Punkt, die von der Propagationsstrecke abhängige Elliptizität (bzw. den "räumlichen Chirp") entstehen, lassen sich dem Stand der Technik nach ausgleichen, indem der virtuelle Interaktionspunkt des AOM durch eine geeignete Relayoptik in die Eintrittspupille des Objektives abgebildet wird und eine Elliptizität gar nicht erst entsteht. Im Rahmen dieser Anmeldung ist unter dem virtuellen Interaktionspunkt (Beugungspunkt) eines akustooptischen Elements, insbesondere eines AOMs, der Punkt zu verstehen, den man erhält, wenn man die Strahlverläufe der aus dem akustooptischen Element ausgetretenen Strahlen entgegen der physikalischen Ausbreitungsrichtung des Lichts verlängert und deren Schnittpunkt bestimmt.

Insbesondere zur Lösung des zweiten Problems ("zeitlicher Chirp") werden im Stand der Technik Prismen (S. Zeng et al., "Simultaneous compensation for spatial and temporal dispersion of acousto-optical deflectors for two-dimensional scanning with a single prism", Opt. Lett. 31,1091-1093 (2006)), Gitter oder weitere akustooptische Bauteile (Y. Kremer et al., "A spatio-temporally compensated acousto-optic scanner for two-photon microscopy providing large field of view", Opt. Express 16, 10066-10076 (2008)) eingesetzt, die in geeigneten Anordnungen im Wesentlichen dafür sorgen, den durch den AOM entstehenden CSA wieder auszugleichen. Diese Ansätze sind jedoch entweder relativ teuer oder unflexibel (beispielsweise bei Änderungen der Laserwellenlänge).

Das Dokument JP 2003 065850 A beschreibt eine Vorrichtung zur zeitaufgelösten Messung eines Lichtemissionsspektrums. Diese Vorrichtung enthält eine Lichtquelle, die gepulstes Licht auf ein akustooptisches Element abgibt. Es sind zwei Optiken vorhanden, von denen eine erste Optik im Strahlengang vor dem akustooptischen Element und eine zweite Optik in dem von dem akustooptischen Element gebeugten Licht angeordnet ist. Die erste Optik erzeugt einen Fokus des einfallenden Lichtstrahls, der innerhalb des akustooptischen Elementes liegt. Der aus dem akustooptischen Element in Richtung der zweiten Optik austretende Lichtstrahl geht von einem virtuellen Interaktionspunkt aus, der den Schnittpunkt in der rückwärtigen Verlängerung der spektral aufgespaltenen Teilstrahlen bildet.

Das Dokument JP H01 265131 A offenbart eine spektroskopische Vorrichtung mit einem akustooptischen Element und zwei fokussierenden Optiken, die sich auf der Lichteintrittsseite bzw. der Lichtaustrittsseite des akustooptischen Elementes befinden.

Das Dokument US 5 694 216 A beschreibt ein in der Magnetkraftmikroskopie einsetzbares interferometrisches Verfahren, bei dem ebenfalls ein akkustooptisches Element und zwei fokussierende Optiken verwendet werden, die auf beiden Seiten des akustoptischen Elementes angeordnet sind.

Aufgabe der vorliegenden Erfindung ist es deshalb, eine kostengünstige und flexible Vorrichtung anzugeben, die den oben beschriebenen CSA des Lichts, das von einem akustooptischen Element, insbesondere eines AOM, gebeugt wurde, stark verringert, so dass qualitativ hochwertige Multiphotonenmikroskopie möglich ist. Ferner ist es Aufgabe der vorliegenden Erfindung, ein entsprechendes Verfahren anzugeben.

Im Gegensatz zu den oben genannten Lösungsansätzen aus dem Stand der Technik, in denen durch geeignete optische Bauteile die spektralen Anteile eines Lichtstrahls bzw. Laserpulses in Ort und Richtung gegenüber dem akustooptischen Element kompensiert werden, wird in der vorliegenden Erfindung lediglich die Kollinearität der chromatischen Anteile am Ort der Objektivpupille sichergestellt. Diese werden dann probenseitig auf den gleichen Ort abgebildet.

Auf Basis dieses erfindungsgemäßen Ansatzes wurde eine technische Umsetzung nach Anspruch 1 für ein überraschend einfach aufgebautes und somit kostengünstig produzierbares Linsensystem gefunden, das flexibel mit einem akustooptischen Element zusammenarbeiten kann und hohen Qualitätsansprüchen bezüglich des Ausgleichens des CSAs des gebeugten Lichts genügt. Vorteilhafte Ausgestaltungen sind Gegenstand der Unteransprüche sowie der nachfolgenden Beschreibung.

Gemäß einem ersten Aspekt der Erfindung umfasst eine erfindungsgemäße Vorrichtung zur Reduzierung des Chromatic Spread Angles von an einem akustooptischen Element gebeugtem Licht das akustooptische Element, angeordnet im Strahlengang eines einfallenden Lichtstrahls, das das gebeugte Licht aus dem einfallenden Lichtstrahl erzeugt, das von einem virtuellen Interaktionspunkt des akustooptischen Elements ausgeht, und ist dadurch gekennzeichnet, dass die Vorrichtung des Weiteren zwei fokussierende Optiken umfasst, wobei die erste fokussierende Optik im Strahlengang vor dem akustooptischen Element angeordnet ist und die zweite fokussierende Optik im gebeugten Licht angeordnet ist, und sich ein Fokus des einfallenden Lichtstrahls hinter der ersten fokussierenden Optik im akustooptischen Element befindet und der virtuelle Interaktionspunkt im vorderen Brennpunkt der zweiten fokussierenden Optik liegt.

Prinzipiell ist eine Umsetzung der Erfindung mit möglichst kurzbrennweitigen Optiken zu bevorzugen, da dadurch der chromatische Parallelversatz verringert wird. Allerdings kann dies, abhängig vom Design des jeweiligen akustooptischen Elements, zu einer mehr oder weniger stark ausgeprägten reduzierten Beugungseffizienz führen: bei größer werdendem spezifischen Eintrittswinkels des einfallenden Lichts (Winkel zwischen optischer Achse und Strahlverlauf), beugt das akustooptische Element das einfallende Licht typischerweise ineffizient. In der Praxis muss daher unter Berücksichtigung des konkreten Anwendungsfalls ein Kompromiss zwischen Parallelversatz und Beugungseffizienz eingegangen werden.

Durch die zweite Optik hinter dem akustooptischen Element mit dem Abstand ihrer Brennweite zum virtuellen Interaktionspunkt propagieren die chromatischen Anteile (ein chromatischer Anteil meint hier das gebeugte Licht einer Wellenlänge) im Wesentlichen kollinear zueinander und zur optischen Achse. Da eine solche Anordnung allerdings die chromatischen Anteile bzw. den resultierenden Lichtstrahl fokussiert und mittelbar somit zu einer der Divergenz des resultierenden Lichtstrahls führt, ist eine erste Optik vor der Akustooptik erforderlich, die dieser Divergenz des Lichtstrahls entgegenwirkt. Die erste Optik vor dem akustooptischen Element sorgt durch eine Fokussierung des einfallenden Lichtstrahls dafür, dass das gebeugte Licht jeder Wellenlänge (also alle chromatischen Anteile), jeweils einen möglichst geringen Strahldurchmesser im akustooptischen Element besitzen.

Die erfindungsmäße Vorrichtung ist insbesondere im Fall eines gepulsten einfallenden Lichtstrahls mit besonders geringen Pulsdauern vorteilhaft einsetzbar, da bei kleiner werdenden Pulsdauern die spektrale Breite und somit der Winkelbereich, in den Licht gebeugt wird, größer wird. Eine Reduzierung des CSA wird also erforderlich oder zumindest wünschenswert.

Beispielhaft sei hier die Anwendung der Vorrichtung in einem Multiphotonenmikroskop beziehungsweise im Bereich der Multiphotonenmikroskopie genannt, die typischerweise Pulsdauern des benutzten Lichtes im Bereich weniger hundert Femtosekunden verwendet. Gemäß einem weiteren Aspekt der Erfindung handelt es sich beim einfallenden Lichtstrahl folglich um gepulstes Licht, das aus einer gepulstes Licht emittierenden Laserlichtquelle stammend (gepulste Laserlichtquelle, gepulster Laser, Pulslaser) stammt, mit einer Pulsdauer von höchstens 1000 fs (also ≤ 1000 fs), vorzugsweise höchstens 800 fs (≤ 800 fs), vorzugsweise höchstens 500 fs (≤ 500 fs). Vorzugsweise beträgt die Pulsdauer höchstens 300 fs (≤ 300 fs), besonders vorzugsweise höchstens 200 fs (≤ 200 fs), und ganz besonders vorzugsweise höchstens 100 fs (≤ 100 fs).

Gemäß einem dritten Aspekt der Erfindung handelt es sich bei dem gebeugten Licht um gebeugtes Licht plus/minus erster Ordnung, da Licht dieser Ordnungen vorzugsweise für mikroskopische Zwecke verwendet wird.

Das Prinzip lässt sich beispielsweise mit Zylinderlinsen und/oder mit sphärischen Linsen umsetzen. Der Vorteil beim Einsatz von Zylinderlinsen liegt in geringeren Spitzenintensitäten (Maximalintensitäten) im Kristall und vor allem auf den Kristalloberflächen. Um die Abbildungseigenschaften zu verbessern sind beispielsweise auch achromatische und/oder asphärische Linsen möglich. Auch mit gekrümmten Spiegeln lässt sich die beschriebene Erfindung umsetzen, wobei hier im Vergleich zum Einsatz von Standardlinsen die nicht auftretenden chromatischen Aberrationen von Vorteil sind. Solche Spiegel können in sphärischer Bauform oder (zur Vermeidung von sphärischen Aberrationen) als Parabolspiegel ausgeprägt sein. Aus Geometriegründen bietet sich unter Umständen auch ein Parabolspiegel in "off-axis" parabolischer (OAP) Bauform an. Allgemein können die verwendeten Optiken ein oder mehrere Linsen und/oder Spiegel und/oder weitere optische Elemente wie Filter oder Prismen beinhalten, wobei verschiedenste Kombinationen denkbar sind.

Folglich umfassen gemäß weiteren bevorzugten Umsetzungen der Erfindung die erste fokussierende Optik und/oder die zweite fokussierende Optik mindestens einen Spiegel und/oder mindestens eine Linse.

Gemäß einer besonders bevorzugten, da konstruktiv einfachen und kostengünstigen Umsetzung der erfindungsgemäßen Vorrichtung besteht die erste fokussierende Optik und/oder die zweite fokussierende Optik aus einer Linse, insbesondere einer sphärischen Linse oder einer Zylinderlinse. Der Einsatz einer Zylinderlinse wird dadurch zweckmäßig, da der AOM die Rotationssymmetrie des Strahlverlaufs bricht, da er nur in einer Raumrichtung eine Aufspaltung bewirkt. Im Fall, dass beide fokussierende Optiken durch einzelne Linsen umgesetzt werden, bestehen vorzugsweise die fokussierenden Optiken entweder beide aus sphärischen Linsen oder beide aus Zylinderlinsen. Dies stellt sicher, dass der Strahl nicht unnötig in einer Dimension fokussiert oder divergiert.

Wie bereits oben erwähnt, wird die Erfindung besonders bevorzugt unter Verwendung eines akustooptischen Modulators (AOM) umgesetzt.

Wie oben dargelegt, eignet sich eine erfindungsgemäße Vorrichtung für einen Einsatz in der Mikroskopie und dort im Bereich der Rastermikroskopie, insbesondere der Multiphotonenmikroskopie. Die Erfindung beinhaltet also ein Mikroskop, insbesondere ein Multiphotonenmikroskop.

Hierbei umfasst das Mikroskop (bzw. Mikroskopsystem) mit einer solchen Vorrichtung (beispielsweise ein Multiphotonenmikroskop) eine gepulstes Licht emittierende Laserlichtquelle zur Probenbeleuchtung, die den in die Vorrichtung eintretenden Lichtstrahl mit einer Pulsdauer von höchstens 1000 fs (also ≤ 1000 fs), vorzugsweise höchstens 800 fs (≤ 800 fs), vorzugsweise höchstens 500 fs (≤ 500 fs), vorzugsweise höchstens 300 fs (≤ 300 fs), besonders vorzugsweise höchstens 200 fs (≤ 200 fs), und ganz besonders vorzugsweise höchstens 100 fs (≤ 100 fs) erzeugen kann. Die erfindungsgemäße Vorrichtung verringert den CSA von an dem akustooptischen Element der Vorrichtung gebeugten Licht, das aus dem einfallenden gepulsten Lichtstrahl erzeugt wird. In diesem Zusammenhang sei noch einmal angemerkt, dass die spektrale Breite und somit der Winkelbereich, in den das Licht gebeugt wird, bei kleiner werdenden Pulsdauern größer wird, der Einsatz eines Mikroskops mit einer erfindungsgemäßen Vorrichtung zur Reduzierung des CSA also bei geringen Pulsdauern besonders vorteilhaft ist.

Das erfindungsgemäße Verfahren zur Reduzierung des Chromatic Spread Angles (CSA) von gebeugtem Licht, dass durch ein akustooptisches Element gebeugt wurde, erfolgt unter Verwendung eines Mikroskops mit einer Vorrichtung nach einem der Ansprüche 1 bis 8.

Ein auf dem Gebiet der vorliegenden Erfindung tätiger Fachmann wird, bei Kenntnis der oben beschriebenen Vorrichtungsmerkmale der erfindungsgemäßen Lösung, den Vorrichtungsmerkmalen entsprechende Verfahrensschritte, vorzugsweise zum Verwenden der oben beschriebenen Vorrichtung, ausgestalten. Insoweit wird zur Vermeidung von Wiederholungen auf den vorangegangenen Teil der Beschreibung verwiesen.

Es gibt nun verschiedene Möglichkeiten, die Lehre der vorliegenden Erfindung in vorteilhafter Weise auszugestalten und weiterzubilden. Dazu ist einerseits auf die dem Patentanspruch 1 nachgeordneten Patentansprüche und andererseits auf die nachfolgende Erläuterung der Erfindung anhand der Zeichnungen zu verweisen. In Verbindung mit der Erläuterung der bevorzugten Ausführungsbeispiele der Erfindung anhand der Zeichnungen werden auch im Allgemeinen bevorzugte Ausgestaltungen und Weiterbildungen der Lehre erläutert.
Figur 1 zeigt schematisch den typischen Beleuchtungsstrahlengang eines Scanmikroskops.
Figur 2 zeigt schematisch den Beugungsvorgang an einem AOM.
Figur 3 zeigt eine schematische Darstellung einer erfindungsgemäßen Vorrichtung.
Figur 4 zeigt schematisch und ausschnittsweise den Strahlverlauf bei Einsatz einer Zylinderlinse als zweite Optik.

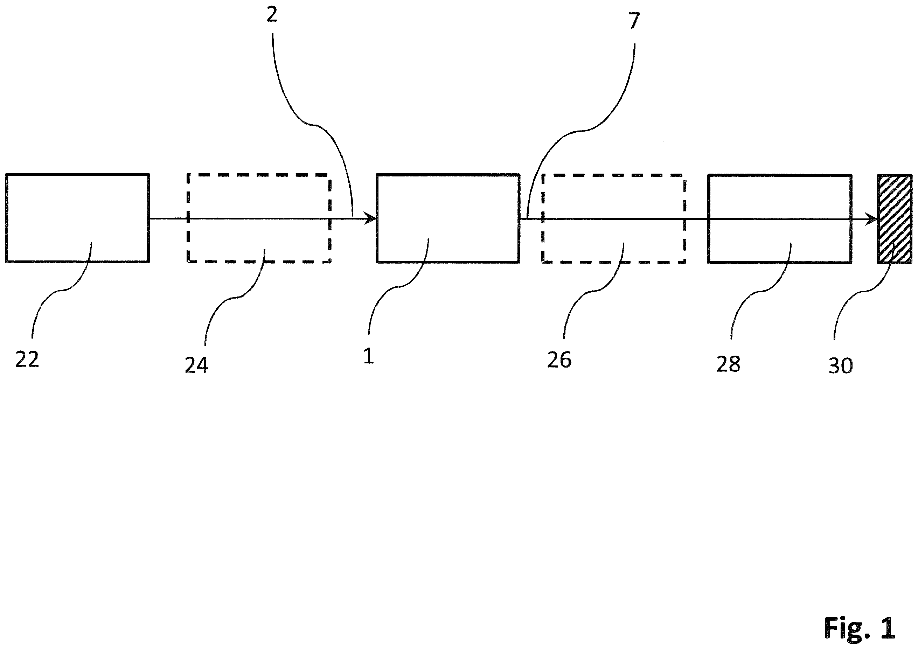

Figur 1 zeigt in stark vereinfachter Form den typischen Beleuchtungsstrahlengang eines Scanmikroskops, beispielsweise eines Multiphotonenmikroskops, mit einem akustooptischen Element 1, insbesondere einem AOM, als Strahlmodulationsmittel. Ausgehend von einer Lichtquelle 22, beispielsweise einem Laser, insbesondere einem Pulslaser, gelangt ein einfallender Lichtstrahl 2, optional über eine Strahlführungs- und Anpassungsoptik 24, zum akustooptischen Element 1. Von dort gelangt das am akustoopischen Element 1 gebeugte Licht 7 über eine optionale Abbildungs- und Scanoptik 26 zum Objektiv 28 und schließlich zur Probe 30.

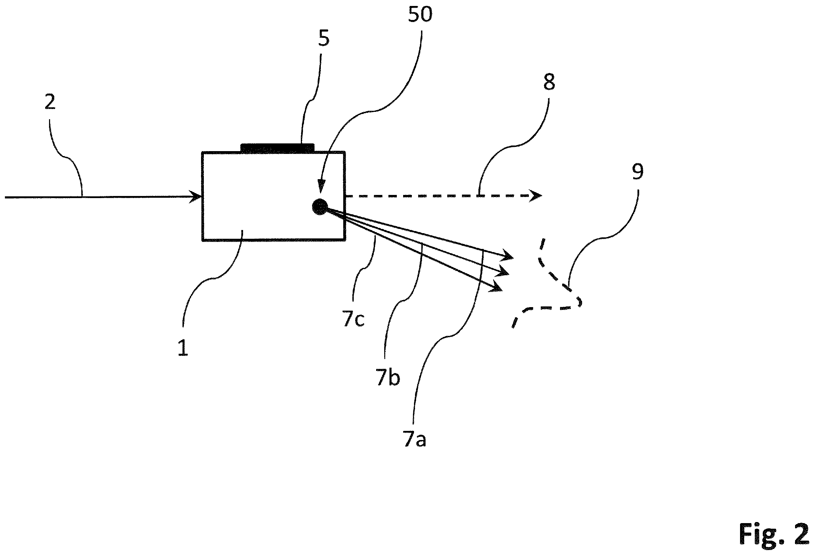

Figur 2 zeigt schematisch den Beugungsvorgang an einem AOM 1, der von einem einfallenden Lichtstrahl 2 mit einer gegebenen Zentralwellenlänge λ und einer spektralen Breite Δλ getroffen wird. An den Kristall des AOM 1 ist ein Transducer 5 angebracht, der eine Radiofrequenz (RF) in den Kristall einprägt. An dem dadurch entstehenden Gitter wird eine ±1. Beugungsordnung des gebeugten Lichts 7 erzeugt, die üblicherweise als Nutzstrahl dient. Aufgrund der endlichen Beugungseffizienz lässt sich in der Regel auch noch die nullte Beugungsordnung 8 nachweisen. Auf Grund der nicht perfekten chromatischen Kollinearität der ersten Beugungsordnung und der endlichen spektralen Bandbreite des einfallenden Lichtpulses 2 ist eine Winkelaufspaltung 9 der ersten ±1. Beugungsordnung gegeben, bei der die verschiedenen Farbanteile des Lichtpulses in leicht unterschiedliche Richtungen gebeugt werden. Exemplarisch ist dies für drei Teilstrahlen 7a, 7b, 7c mit drei verschiedenen Wellenlängen λ₁, λ₂ und λ₃ gezeigt. Die Größe dieser Auffächerung des gebeugten Lichts wird über den Chromatic Spread Angle (CSA) in der Einheit mrad/nm angegeben. Diese gebeugten Teilstrahlen 7a, 7b, 7cgehen von einem virtuellen Interaktionspunkt 50 des AOM 1 aus, den man erhält, wenn man die Strahlverläufe entgegen der physikalischen Ausbreitungsrichtung verlängert und den Schnittpunkt bestimmt, ohne etwaige Brechungseffekte an dem Übergang zwischen Kristall des AOM 1 und dem Umgebungsmedium zu berücksichtigen.

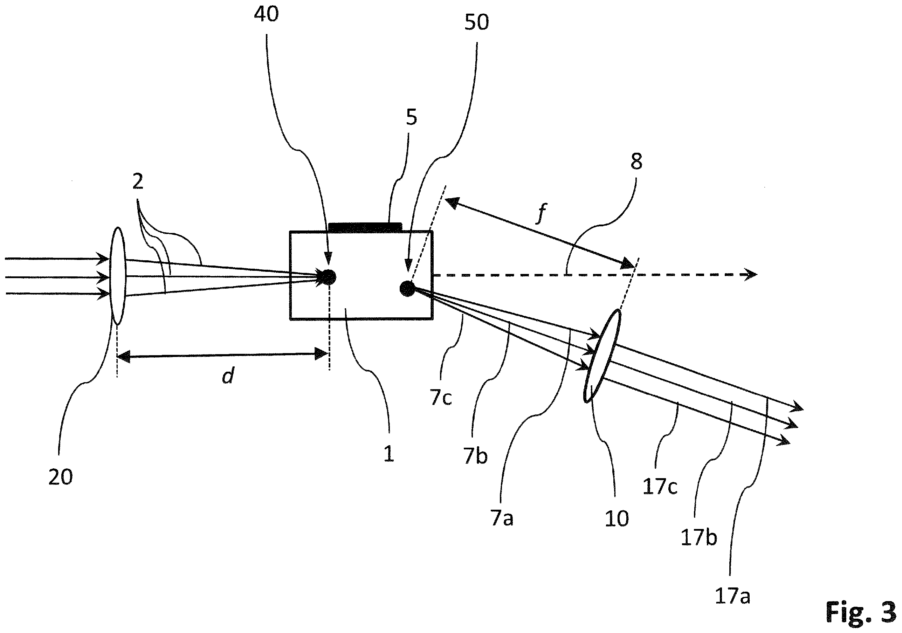

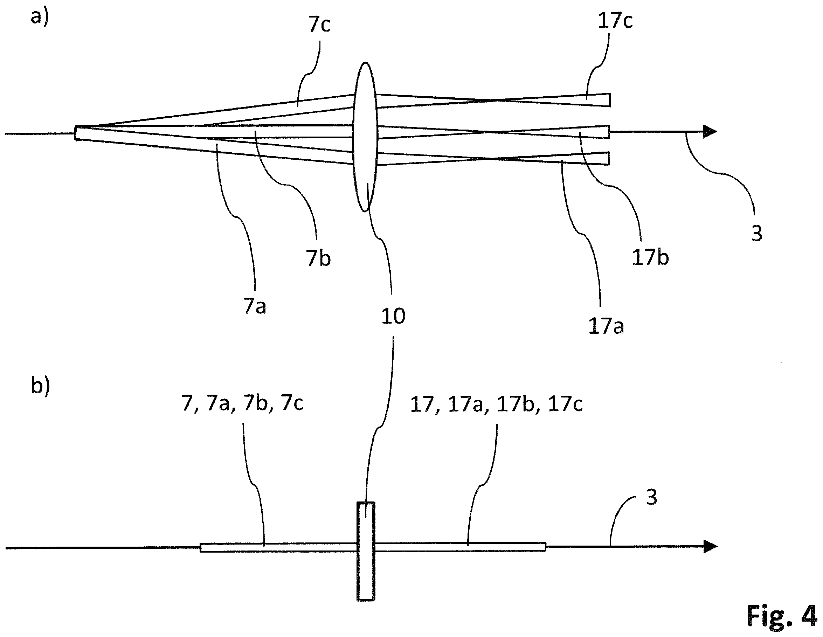

Figur 3 zeigt eine schematische Darstellung einer erfindungsgemäßen Vorrichtung, bei der sich eine erste Optik 20 (beispielsweise eine einzelne Linse) vor einem AOM 1 und eine zweite Optik 10 (ebenfalls beispielsweise eine einzelne Linse) nach dem AOM 1 befindet. Die erste Optik 20 wird so positioniert, dass die von ihr fokussierten Lichtstrahlen des einfallenden Lichts 2 im AOM 1 in einem Fokus 40 im Abstand d von der ersten Optik 20 fokussiert werden, d.h. die Strahlverläufe der Lichtstrahlen des einfallenden Lichts 2 sich in einem Punkt im Kristall schneiden. (In der Zeichnung sind Brechungseffekte beim Übergang des Lichts vom umgebenen Medium in den Kristall der Übersichtlichkeit halber nicht dargestellt, diese sind allerdings natürlich bei der Platzierung der ersten Optik 20 zu berücksichtigen. Der Abstand d entspricht typischerweise nicht der Brennweite der Optik 20 im umgebenden Medium, bspw. in Luft.) Die zweite Optik 10 hinter dem AOM 1 wird so positioniert, dass die chromatischen Anteile der beispielsweise ±1. Beugungsordnung, beispielhaft gezeigt an den Teilstrahlen 7a, 7b, 7c, chromatisch kollinear zueinander verlaufen (chromatische Kollinearität). Diese chromatischen Teilstrahlen 7a, 7b, 7c gehen in die Teilstrahlen 17a, 17b, 17c über. Der so generierte kollimierte Strahl (der die Teilstrahlen 17a, 17b, 17c beinhaltet) wird zur Probe 30 weitergeleitet. Der Abstand zwischen der zweiten Optik 10 und dem virtuellen Interaktionspunkt 50 entspricht folglich der Brennweite *f* der zweiten Optik 10. Die zweite Optik 10 dient hierbei zur Erreichung der chromatischen Kollinearität der ±1. Beugungsordnung und damit der Kollimierung des gebeugten Lichts, während die erste Optik 20 unerwünschte Divergenzen der chromatischen Teilstrahlen 17a, 17b, 17c (siehe Figur 4) und des resultierenden Lichtstrahls bestmöglich ausgleicht oder zumindest diesen entgegenwirkt.

Figur 4 zeigt schematisch und ausschnittsweise den Strahlverlauf bei Einsatz einer Zylinderlinse als zweite Optik 10 im Detail, wobei in den Teilfiguren a) und b) die Anordnung aus zwei Perspektiven dargestellt ist, die zueinander um 90° bezüglich der optischen Achse 3 gedreht sind. Die chromatischen Teilstrahlen 7a, 7b, 7c werden jeweils durch die Zylinderlinse 10 fokussiert, was zu unerwünschten Divergenzen der Teilstrahlen 17a, 17b, 17c und des resultierenden Lichtstrahls in einer Raumrichtung hinter der Zylinderlinse 10 führt (siehe Teilfigur a)). Diese Divergenzen werden bestmöglich durch die erste Optik 20 vor dem AOM 1 ausgeglichen, indem diese erste Optik 20 durch die von ihr durchgeführte Fokussierung dafür sorgt, dass das gebeugte Licht jeder Wellenlänge (also die chromatischen Anteile), in Figur 3 beispielhaft dargestellt durch die Teilstrahlen 7a, 7b, 7c, jeweils für sich einen möglichst geringen Strahldurchmesser besitzt.

## Patentansprüche

1. Mikroskop, beinhaltend eine Vorrichtung zur Reduzierung des Chromatic Spread Angles von an einem akustooptischen Element (1) gebeugtem Licht (7)
wobei die Vorrichtung umfasst
das akustooptische Element (1),
angeordnet in einem Strahlengang eines einfallenden Lichtstrahls (2),
das das gebeugte Licht (7) aus dem einfallenden Lichtstrahl (2) erzeugt, das von einem virtuellen Interaktionspunkt (50) des akustooptischen Elements (1) ausgeht,
wobei das Mikroskop eine gepulstes Licht emittierende Laserlichtquelle zur Probenbeleuchtung umfasst, die den einfallenden Lichtstrahl (2) mit einer Pulsdauer ≤ 1000 fs zur Verfügung stellt,
**dadurch gekennzeichnet, dass**
die Vorrichtung zwei fokussierende Optiken (10, 20) umfasst,
wobei die erste fokussierende Optik (20) im Strahlengang vor dem akustooptischen Element (1) angeordnet ist und die zweite fokussierende Optik (10) im gebeugten Licht (7) angeordnet ist
und
sich ein Fokus (40) des einfallenden Lichtstrahls (2) hinter der ersten fokussierenden Optik (20) im akustooptischen Element (1) befindet und der virtuelle Interaktionspunkt (50) im vorderen Brennpunkt der zweiten fokussierenden Optik (10) liegt.

2. Mikroskop nach Anspruch 1, **dadurch gekennzeichnet, dass** das gebeugte Licht (7) gebeugtes Licht plus/minus erster Ordnung ist.

3. Mikroskop nach Anspruch 1 oder 2, **dadurch gekennzeichnet, dass** die erste fokussierende Optik (20) und/oder die zweite fokussierende Optik (10) mindestens einen Spiegel umfasst.

4. Mikroskop nach einem der Ansprüche 1 bis 3, **dadurch gekennzeichnet, dass** die erste fokussierende Optik (20) und/oder die zweite fokussierende Optik (10) mindestens eine Linse umfasst.

5. Mikroskop nach einem der Ansprüche 1 bis 4, **dadurch gekennzeichnet, dass** die erste fokussierende Optik (20) und/oder die zweite fokussierende Optik (10) aus einer Linse, insbesondere einer sphärischen Linse oder einer Zylinderlinse, besteht.

6. Mikroskop nach einem der Ansprüche 1 bis 5, **dadurch gekennzeichnet, dass** es sich bei dem akustooptischen Element um einen akustooptischen Modulator handelt.

7. Mikroskop nach einem der Ansprüche 1 bis 6, **dadurch gekennzeichnet, dass** die Laserlichtquelle den einfallenden Lichtstrahl (2) mit einer Pulsdauer ≤ 300 fs und besonders vorzugsweise ≤ 100 fs zur Verfügung stellt.

8. Mikroskop nach einem der Ansprüche 1 bis 7, **dadurch gekennzeichnet, dass** das Mikroskop ein Multiphotonenmikroskop ist.

9. Verfahren zur Reduzierung des Chromatic Spread Angles von an einem akustooptischen Element (1) gebeugtem Licht (7) unter Verwendung eines Mikroskops nach einem der Ansprüche 1 bis 8,
wobei
das akustooptische Element (1) im Strahlengang eines einfallenden Lichtstrahls (2) angeordnet ist und das gebeugtes Licht (7) aus dem einfallenden Lichtstrahl (2) erzeugt wird, wobei das gebeugte Licht (7) von einem virtuellen Interaktionspunkt (50) des akustooptischen Elements (1) ausgeht,
umfassend
das Fokussieren des Lichtstrahls (2) durch eine erste fokussierende Optik (20) in einen Fokus (40), wobei sich der Fokus (40) im akustooptischen Element (1) befindet,
das Erzeugen von gebeugtem Licht (7) aus dem Lichtstrahl (2) durch das akustooptische Element (1), wobei das gebeugte Licht (7) von einem virtuellen Interaktionspunkt (50) des akustooptischen Elements (1) ausgeht,
das Durchlaufen des gebeugten Lichts (7) durch eine zweite fokussierende Optik (10), wobei der virtuelle Interaktionspunkt (50) im vorderen Brennpunkt der zweiten fokussierenden Optik (10) liegt,
wobei der einfallende Lichtstrahl (2) ein gepulster Lichtstrahl aus einer gepulstes Licht emittierenden Laserlichtquelle mit einer Pulsdauer ≤ 1000 fs ist.

10. Verfahren nach Anspruch 9, **dadurch gekennzeichnet, dass** der einfallende Lichtstrahl ein gepulster Lichtstrahl aus der gepulstes Licht emittierenden Laserlichtquelle mit einer Pulsdauer ≤ 300 fs und besonders vorzugsweise ≤ 100 fs ist.

11. Verfahren nach Anspruch 9 oder 10, **dadurch gekennzeichnet, dass** das gebeugte Licht (7) gebeugtes Licht plus/minus erster Ordnung ist.

12. Verfahren nach einem der Ansprüche 9 bis 11, **dadurch gekennzeichnet, dass** die erste fokussierende Optik (20) und/oder die zweite fokussierende Optik (10) mindestens einen Spiegel umfasst.

13. Verfahren nach einem der Ansprüche 9 bis 12, **dadurch gekennzeichnet, dass** die erste fokussierende Optik (20) und/oder die zweite fokussierende Optik (10) mindestens eine Linse umfasst.

14. Verfahren nach einem der Ansprüche 9 bis 13, **dadurch gekennzeichnet, dass** die erste fokussierende Optik (20) und/oder die zweite fokussierende Optik (10) aus einer Linse, insbesondere einer Zylinderlinse, besteht.

15. Verfahren nach einem der Ansprüche 9 bis 14, **dadurch gekennzeichnet, dass** es sich bei dem akustooptischen Element um einen akustooptischen Modulator handelt.

## Claims

1. A microscope, comprising a device for reducing the chromatic spread angle of light (7) diffracted at an acousto-optical element (1),
the device comprising
the acousto-optical element (1)
which is disposed in a beam path of an incident light beam (2),
which generates the diffracted light (7) from the incident light beam (2), said diffracted light emanating from a virtual interaction point (50) of the acousto-optical element (1),
wherein the microscope comprises a laser light source emitting pulsed light for specimen illumination, the laser light source providing the incident light beam (2) with a pulse duration ≤ 1000 fs,
**characterized in that**
the device comprises two focusing optical units (10, 20),
wherein the first focusing optical unit (20) is disposed in the beam path upstream of the acousto-optical element (1) and the second focusing optical unit (10) is disposed in the diffracted light (7),
and
a focus (40) of the incident light beam (2) is situated downstream of the first focusing optical unit (20) in the acousto-optical element (1) and the virtual interaction point (50) is located in the front focus of the second focusing optical unit (10).

2. The microscope according to claim 1, **characterized in that** the diffracted light (7) is diffracted light plus/minus first order.

3. The microscope according to claim 1 or 2, **characterized in that** the first focusing optical unit (20) and/or the second focusing optical unit (10) comprises at least one mirror.

4. The microscope according to one of the claims 1 to 3, **characterized in that** the first focusing optical unit (20) and/or the second focusing optical unit (10) comprises at least one lens.

5. The microscope according to one of the claims 1 to 4, **characterized in that** the first focusing optical unit (20) and/or the second focusing optical unit (10) comprises a lens, in particular a spherical lens or a cylinder lens.

6. The microscope according to one of the claims 1 to 5, **characterized in that** the acousto-optical element is an acousto-optical modulator.

7. The microscope according to one of the claims 1 to 6, **characterized in that** the laser light source provides the incident light beam (2) with a pulse duration ≤ 300 fs and particularly preferably ≤ 100 fs.

8. The microscope according to one of the claims 1 to 7, **characterized in that** the microscope is a multi-photon microscope.

9. A method for reducing the chromatic spread angle of light (7) diffracted at an acousto-optical element (1) using a microscope according to one of the claims 1 to 8,
wherein
the acousto-optical element (1) is disposed in the beam path of an incident light beam (2) and the diffracted light (7) is generated from the incident light beam (2), the diffracted light (7) emanating from a virtual interaction point (50) of the acousto-optical element (1),
comprising
the focusing of the light beam (2) by a first focusing optical unit (20) in a focus (40), wherein the focus (40) is located in the acousto-optical element (1), the generating of diffracted light (7) from the light beam (2) by the acousto-optical element (1), the diffracted light (7) emanating from a virtual interaction point (50) of the acousto-optical element (1),
the passing of the diffracted light (7) through a second focusing optical unit (10), wherein the virtual interaction point (50) lies in the front focus of the second focusing optical unit (10), wherein the incident light beam (2) is a pulsed light beam from a laser light source emitting pulsed light with a pulse duration ≤ 1000 fs.

10. The method according to claim 9, **characterized in that** the incident light beam is a pulsed light beam from the laser light source emitting pulsed light with a pulse duration ≤ 300 fs and particularly preferably ≤ 100 fs.

11. The method according to claim 9 or 10, **characterized in that** the diffracted light (7) is diffracted light plus/minus first order.

12. The method according to one of the claims 9 to 11, **characterized in that** the first focusing optical unit (20) and/or the second focusing optical unit (10) comprises at least one mirror.

13. The method according to one of the claims 9 to 12, **characterized in that** the first focusing optical unit (20) and/or the second focusing optical unit (10) comprises at least one lens.

14. The method according to one of the claims 9 to 13, **characterized in that** the first focusing optical unit (20) and/or the second focusing optical unit (10) comprises a lens, in particular a cylinder lens.

15. The method according to one of the claims 9 to 14, **characterized in that** the acousto-optical element is an acousto-optical modulator.

## Revendications

1. Microscope comprenant un dispositif de réduction de l'angle d'étalement chromatique d'une lumière (7) diffractée au niveau d'un élément acousto-optique (1), dans lequel le dispositif comprend
l'élément acousto-optique (1),
agencé sur un chemin de faisceau d'un faisceau lumineux incident (2) qui génère la lumière (7) diffractée à partir du faisceau lumineux incident (2), lequel provient d'un point d'interaction virtuel (50) de l'élément acousto-optique (1),
dans lequel le microscope comprend une source de lumière laser émettant une lumière pulsée pour l'éclairage de l'échantillon, qui fournit le faisceau lumineux incident (2) avec une durée d'impulsion de ≤ 1000 fs,
**caractérisé**
**en ce que** le dispositif comprend deux optiques de mise au point (10, 20),
dans lequel la première optique de mise au point (20) est agencée sur le chemin de faisceau devant l'élément acousto-optique (1) et la deuxième optique de mise au point (10) est agencée dans la lumière (7) diffractée, et
**en ce qu'**un foyer (40) du faisceau lumineux incident (2) se trouve derrière la première optique de mise au point (20) dans l'élément acousto-optique (1) et le point d'interaction virtuel (50) se trouve au point focal avant de la deuxième optique de mise au point (10).

2. Microscope selon la revendication 1, **caractérisé en ce que** la lumière (7) diffractée est une lumière diffractée d'ordre plus ou moins 1.

3. Microscope selon la revendication 1 ou 2, **caractérisé en ce que** la première optique de mise au point (20) et/ou la deuxième optique de mise au point (10) comprend au moins un miroir.

4. Microscope selon l'une des revendications 1 à 3, **caractérisé en ce que** la première optique de mise au point (20) et/ou la deuxième optique de mise au point (10) comprend au moins une lentille.

5. Microscope selon l'une des revendications 1 à 4, **caractérisé en ce que** la première optique de mise au point (20) et/ou la deuxième optique de mise au point (10) est constituée d'une lentille, en particulier d'une lentille sphérique ou d'une lentille cylindrique.

6. Microscope selon l'une des revendications 1 à 5, **caractérisé en ce que** l'élément acousto-optique est un modulateur acousto-optique.

7. Microscope selon l'une des revendications 1 à 6, **caractérisé en ce que** la source de lumière laser fournit le faisceau lumineux incident (2) avec une durée d'impulsion de ≤ 300 fs et de manière particulièrement préférée de ≤ 100 fs.

8. Microscope selon l'une des revendications 1 à 7, **caractérisé en ce que** le microscope est un microscope multiphotonique.

9. Procédé de réduction de l'angle d'étalement chromatique d'une lumière (7) diffractée par un élément acousto-optique (1) par utilisation d'un microscope selon l'une des revendications 1 à 8,
dans lequel
l'élément acousto-optique (1) est agencé sur le chemin de faisceau d'un faisceau lumineux incident (2) et la lumière (7) diffractée est générée à partir du faisceau lumineux incident (2), dans lequel la lumière (7) diffractée provient d'un point d'interaction virtuel (50) de l'élément acousto-optique (1),
comprenant
la mise au point du faisceau lumineux (2) par une première optique de mise au point (20) en un foyer (40), dans lequel le foyer (40) est situé dans l'élément acousto-optique (1),
la génération d'une lumière (7) diffractée à partir du faisceau lumineux (2) par l'élément acousto-optique (1), dans lequel la lumière (7) diffractée provient d'un point d'interaction virtuel (50) de l'élément acousto-optique (1),
le passage de la lumière (7) diffractée à travers une deuxième optique de mise au point (10),
dans lequel le point d'interaction virtuel (50) est situé au foyer avant de la deuxième optique de mise au point (10), dans lequel le faisceau lumineux incident (2) est un faisceau lumineux pulsé provenant d'une source de lumière laser émettant une lumière pulsée avec une durée d'impulsion de ≤ 1000 fs.

10. Procédé selon la revendication 9, **caractérisé en ce que** le faisceau lumineux incident est un faisceau lumineux pulsé provenant de la source de lumière laser émettant de la lumière pulsée avec une durée d'impulsion de ≤ 300 fs et de manière particulièrement préférée de ≤ 100 fs.

11. Procédé selon la revendication 9 ou 10, **caractérisé en ce que** la lumière (7) diffractée est une lumière diffractée d'ordre plus ou moins 1.

12. Procédé selon l'une des revendications 9 à 11, **caractérisé en ce que** la première optique de mise au point (20) et/ou la deuxième optique de mise au point (10) comprend au moins un miroir.

13. Procédé selon l'une des revendications 9 à 12, **caractérisé en ce que** la première optique de mise au point (20) et/ou la deuxième optique de mise au point (10) comprend au moins une lentille.

14. Procédé selon l'une des revendications 9 à 13, **caractérisé en ce que** la première optique de mise au point (20) et/ou la deuxième optique de mise au point (10) est constituée d'une lentille, en particulier d'une lentille cylindrique.

15. Procédé selon l'une des revendications 9 à 14, **caractérisé en ce que** l'élément acousto-optique est un modulateur acousto-optique.
